# EUROPEAN PATENT SPECIFICATION

(11) **EP 1 745 340 B1**
(45) Date of publication and mention of the grant of the patent: **13.04.2011**
(21) Application number: 05733789.1
(22) Date of filing: 29.04.2005
(51) Int. Cl.: G06F 21/02

(54) **INTRUSION DETECTION DURING PROGRAM EXECUTION IN A COMPUTER**
EINDRINGDETEKTION WÄHREND DER PROGRAMMAUSFÜHRUNG IN EINEM COMPUTER
DETECTION D'INTRUSION AU COURS DE L'EXECUTION D'UN PROGRAMME DANS UN ORDINATEUR

(30) Priority: 29.04.2004 US 566473 P
(43) Date of publication of application: 24.01.2007
(73) Proprietor: NXP B.V., 5656 AG Eindhoven (NL)
(72) Inventor: OMAHONY, Padraig, NL-5621 BA Eindhoven (NL)
(74) Representative: Schouten, Marcus Maria
(86) International application number: PCT/IB2005/051416
(87) International publication number: WO 2005/106619

(56) References cited:
- KC G.S., KEROMYTIS A.D., PREVELAKIS V.: "Countering code-injection attacks with instruction-set randomization" PROCEEDINGS OF THE 10TH ACM CONFERENCE ON COMPUTER AND COMMUNICATION SECURITY, 2003, pages 272-280, XP002333430 NEW YORK, USA ISBN: 1-58113-738-9

## Description

The present invention relates to computer systems, and more particularly, but not exclusively, relates to intrusion detection of computer systems.

Because of increased network connectivity, computer systems are becoming increasingly vulnerable to attack. These attacks often exploit flaws in either the operating system or application programs. The general goal of such intrusions is to subvert the traditional security mechanisms on the systems and execute operations in excess of the intruder's authorization. These operations could include reading protected or private data or simply doing malicious damage to the system or user files.

Traditionally, protection has been based on detection of a compromising program before it is executed; however, recent intrusions can attack while a trusted program is executing. One example of this type of attack initiates execution of malicious code by overflowing an unchecked buffer. This type of attack is further explained, for example, in Kirovski and Drinic et al., Enabling Trusted Software Integrity, SIGPLAN Notices, Vol. 37, No. 10, pp. 108-120, (October 2002).

One attempt to address this form of intrusion monitors for unexpected program behavior, as explained in PAID: Program-semantics Aware Intrusion Detection, available form the web site: www.ecsl.cs.sunysb.edu/paid, which is hereby incorporated by reference in its entirety. Possible drawbacks of this approach include the need to substantially change the operating system and/or a significant increase in attendant runtime overhead. Another scheme, called Return Address Defender (RAD), is implemented at compile time, generally being limited to applications where source code is available. Thus, there continues to be a demand for further contributions in this area of technology.

KC G.S., KEROMYTIS A.D., PREVELAKIS V.: "Countering code-injection attacks with instruction-set randomization" PROCEEDINGS OF THE 10TH ACM CONFERENCE ON COMPUTER AND COMMUNICATION SECURITY, 2003, pages 272-280, XP002333430 NEW YORK, USA ISBN: 1-58113-738-9, describes an approach for safeguarding systems against code-injection attacks. Process-specific randomized instruction sets of the system are generated by using a key for the randomization algorithm. Injected code will be invalid for the randomized processor.

In accordance with the invention, a method is provided as defined in claim1. Other aspects of the invention provide an apparatus in accordance with claim 11 and a computer system as defined in claim 17.

One embodiment of the present invention is a unique intrusion detection technique.

Further embodiments of the invention are specified in the respective appended dependent claims.

The method includes: altering content of one or more instructions of a computer program, and when executing the computer program, restoring each of the one or more instructions to its content before this alteration. During execution of the computer program, intrusion by a different program may be detected through its submission of at least one instruction for execution that is of improper form. For example, this improper form may be a reserved or invalid instruction type relative to the one or more processors or processing devices executing the computer program.

The apparatus includes a device storing a computer program that includes a number of instructions each with content in an altered form in accordance with an instruction transformation arranged to detect intrusion by a different program during execution of the computer program with a processor. Before execution, the altered form of the instructions can be restored by the processor to an unaltered form based on information about the transformation. The unaltered form of the instructions each belong to an executable instruction set for the processor and the altered form of at least a portion of the instructions do not belong to the executable instruction set for the processor and/or are of a reserved or invalid type. As used herein, an "executable instruction" refers to an instruction format that performs a desired operation when executed by a processing device, and excludes any instruction format treated by the processing device as improper, including, but not limited to any instruction designated as a reserved or invalid type for the processing device.

The system includes a processing device with instruction transformation logic to alter content of one or more instructions of a computer program and store the computer program after such alteration. The processing device further includes a decoder responsive to this transformation logic to restore the one or more instructions to the content before alteration. The processing device is effective to execute the instructions after restoration by the decoder and indicate intrusion by a different program based on submission of an improper form of instruction from the different program for execution by the processing device. As used herein, "logic" broadly includes combinatorial operations and/or sequential operations and can be in the form of hardware, software, firmware, or a combination of these.

The thechnique consists in changing content of one or more instructions of a computer program from an unaltered form to an altered form to detect intrusion by a different program. The altered form of each of the one or more instructions belongs to an executable instruction set for a processing device and the altered form of at least a portion of the one or more instructions does not belong to the executable instruction set. Alternatively or additionally, the altered form of at least a portion of the one or more instructions does not execute as intended for the computer program relative to its unaltered form. This technique further includes restoring each of the one or more instructions of the altered form to the unaltered form before execution with the processing device. This restoration may be performed by the processing device as part of instruction decoding to execute the computer program.

Still a further embodiment includes a device with processor-executable information to instruct one or more processors to change content of one or more instructions of a computer program from an unaltered form to an altered form to facilitate detection of an intruding program. The unaltered form of each of the one or more instructions belongs to an executable instruction set of the one or more processors and the altered form of each of the one or more instructions does not execute as intended for the computer program. Alternatively or additionally, the altered form of each of the one or more instructions does not belong to the executable instruction set for the one or more processors, being, for example a reserved or invalid instruction type. The processor-executable information is further effective to instruct one or more processors to restore the one or more instructions of the altered form to the unaltered form before execution.

Further embodiments, forms, aspects, benefits, advantages, and features of the inventions will become apparent from the figures and description provided herewith.
Fig. 1 is a diagrammatic view a computer system.
Fig. 2 is a flowchart of a procedure for detecting intrusion of the computer system of Fig. 1.
Fig. 3 is a schematic view of one type of instruction transformation logic for the procedure of Fig. 2 with the computer system of Fig. 1.
Fig. 4 is a flowchart of an alternative procedure for detecting intrusion of the computer system of Fig. 1 that can be used in combination with the procedure of Fig. 2 or without the procedure of Fig. 2.

For the purpose of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

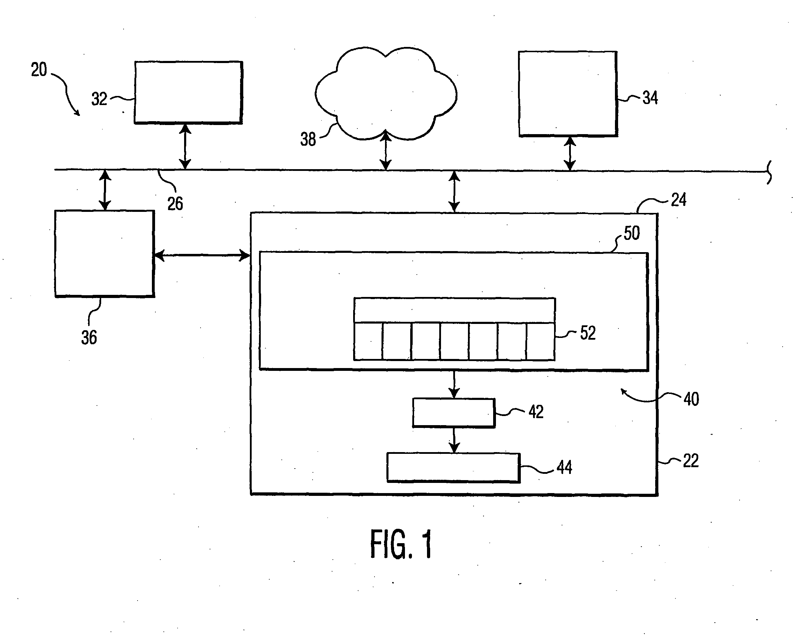

Fig. 1 depicts computer system 20. Computer system 20 includes at least one processor 22 alternatively designated as processing device 24. Processing device 24 is coupled to computer bus 26, and correspondingly several different memory devices. Specifically, nonvolatile file memory 32, removable memory device 34, and program execution memory 36 are coupled to processing device 24 via bus 26. As depicted, program execution memory 36 also has another dedicated connection to processing device 24. Bus 26 is also coupled to computer network 38 by appropriate equipment (not shown), such as an interface device, router, hub, firewall device, or the like, as appropriate. Computer network 38 can be of a Local Area Network (LAN) type, Municipal Area Network (MAN) type, Wide Area Network (WAN) type, including the internet, or a combination of these, to name just a few examples.

Processing device 24 includes instruction decoder 42, decoded instruction execution logic 44, and instruction transformation logic 50, to be further described hereinafter. Processing device 24 can be in the form of one or more controllers or processors of a RISC, CISC, or any other variety. Processing device 24 can be comprised of one or more components integrated together in a single unit or provided in the form of one or more units remotely located relative to one another and coupled together in a manner appropriate for its operation. Furthermore, processing device 24 includes desired support components, such as a power supply, direct memory access controller, input/output controller, communications parts, operator input/output devices, and the like as would occur to those skilled in the art.

Instruction decoder 42 is a part of the processing logic of device 24 that is responsive to an instruction submitted for execution. Decoder 42 is arranged to convert a multibit instruction format into various signals utilized by decoded instruction execution logic 44 to perform a desired operation corresponding to the instruction. Execution logic 44 may, but does not necessarily, include one or more Arithmetic-Logic Units (ALUs), communication logic units, and/or such other execution logic or logic units as would be desired to perform various operations. When multiple logic units are present, they can be arranged in a parallel and/or pipelined manner as would occur to those skilled in the art to execute desired operations.

Nonvolatile file memory 32 can be of an electromagnetic disk, tape, or cartridge form, an electrically reprogrammable solid-state type of nonvolatile memory such as a flash memory, or such other variety as would occur to those skilled in the art. Removable memory device 34 can be, for example, a floppy disk, cartridge, or tape form of removable electromagnetic recording media, a removable optical disk such as a CD or DVD type, an electrically reprogrammable solid-state type of nonvolatile memory such as a smart card or removable memory cartridge, and/or such different varieties as would occur to those skilled in the art. Program execution memory 36 is of a type which is loaded with instructions of a computer program intended to be executed by processing device 24. Program execution memory 36 is typically a solid-state type of electronic memory of the Random Access Memory (RAM) variety. Alternatively or additionally, program execution memory 36 can be comprised of one or more different types as would occur to those skilled in the art. In different embodiments, program execution memory 36 can be partially or completely integrated with processing device 24, or be entirely separate therefrom. In one form, memory 36 includes an associative cache.

Various operational aspect of computer system 20 are next described. Computer system 20 is arranged to execute computer programs that have been changed into a format appropriate for execution by a compiler or interpreter. Typically, a binary format is appropriate for this purpose. These computer programs are typically stored in file memory 32 or removable memory device 34 initially. However, before execution, a computer program intended for use is at least partially loaded into program execution memory 36 at the direction of processing device 24. To detect intrusive programs during the execution of a computer program, device 24 customizes its own instruction set with instruction transformation logic 50 to alter at least some instructions so they would not execute in the manner intended unless restored to their prior, unaltered state.

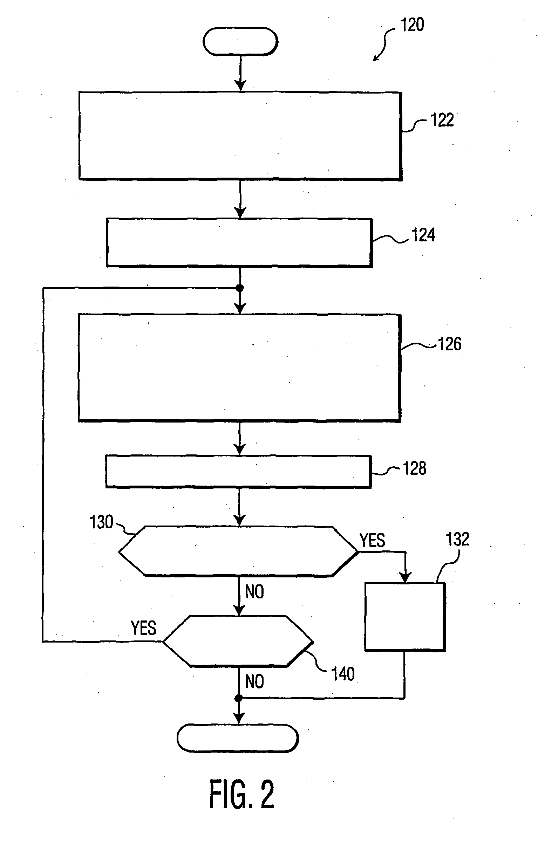

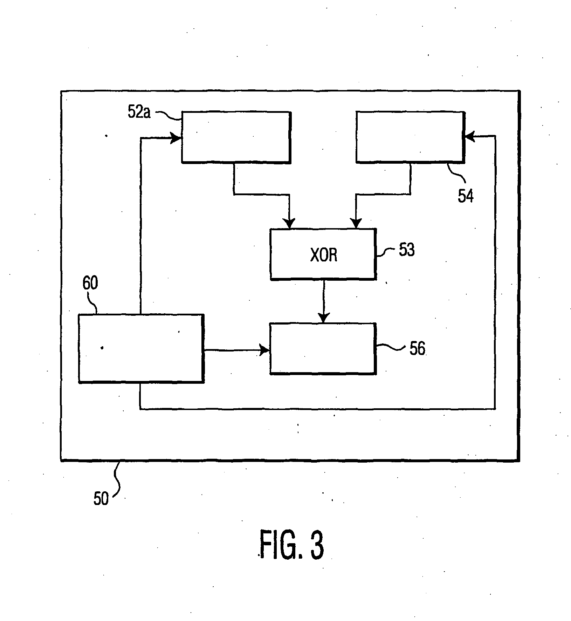

Referring additionally to Figs. 2 and 3, one mode of implementing intrusion detection with computer system 20 is described in connection with procedure 120. Procedure 120 begins with operation 122. In operation 122, a computer program intended for execution by processing device 24 is selected, and at least a portion of the instructions for the program are transformed. This transformation changes content of the affected instructions from an unaltered, original form to an altered form, which is at least partly performed by instruction transformation logic 50 of processing device 24. Instruction transformation logic 50 includes registers 52, one or more of which is used to configure instruction transformation in accordance with a multibit value in the form of key 52a. Key 52a can be stored in one or more of registers 52. As depicted in Figs. 2 and 3, one form of instruction transformation is performed with "exclusive or" (XOR) logic 53, which performs a bitwise, exclusive OR logical operation between the bits of key 52a and a multibit representation of each instruction. Each instruction submitted for exclusive OR transformation by logic 53 is represented as "instruction in" 54, and the exclusive OR result or output is represented by "instruction out" 56. An exclusive OR logical function is a form of boolean comparison in binary. Specifically, the exclusive OR function outputs a 1 bit if the binary input bits from a corresponding position of key 52a and "instruction in" 54 being compared differ (1 and 0 or 0 and 1, respectively) and outputs a 0 bit otherwise (key and "in instruction" input bit position both equal 0 or both equal 1). By way of an 8-bit length example, for a key 52a value of 10010010 and an "instruction in" 54 value of 01100010, the "instruction out" 56 value is 11110000 due to the exclusive OR operation of XOR logic 53. Naturally, more or fewer bits can be used in defining the instruction and corresponding key as would occur to those skilled in the art. Typically, all of the instructions of a program intended for execution are transformed with XOR logic in operation 122 of procedure 120.

In one preferred form, the value of key 52a is static, being kept the same for each instruction submitted for transformation in operation 122. In a more preferred form, the key dynamically changes from time-to-time. In one nonlimiting example of this more preferred form, the key dynamically changes depending on which process a timesharing operating system has scheduled for execution. In an even more preferred form, the key dynamically changes with the address of instructions submitted for execution. In one nonlimiting example of this even more preferred form, the address of the instruction currently being executed is utilized as the dynamic key. Transformation logic 50 also includes control/configuration logic 60. Control/configuration logic 60 directs transformation operation 122 for each instruction and routes corresponding information and signals appropriately. Control/configuration logic 60 is responsive to information in at least one of registers 52 to enable/disable transformation, determine what key source is utilized, determine if a a static or dynamic key will be utilized, determine whether all or only a designated portion of instructions will be transformed and/or determine what, if any, other configuration and optional features are to be utilized in connection with the operation of logic 50.

It should be appreciated that the original content of instructions prior to transformation typically belongs to a set of executable instructions for processing device 24. However, once transformation with the XOR logic 53 is performed, the instructions typically will not perform as intended for the computer program unless restored back to its original unaltered content. Indeed, the altered instruction content resulting from transformation will typically render at least some, if not all of the instructions unexecutable and/or of a reserved or invalid type for processing device 24. It should further be appreciated that the execution of operation 122 results in the implementation of a transformation process by device 24 that can be reversed to restore original, unaltered instruction content, provided that sufficient information about the transformation process is available/retained by processing device 24.

From operation 122, procedure 120 continues with operation 124. In operation 124, the computer program transformed with logic 50 is stored. In one preferred embodiment, the computer program with altered instruction content from operation 122 is stored in nonvolatile file memory 32 in operation 124. In a more preferred embodiment, the computer program with altered instruction content from operation 122 is stored in removable memory device 34 in operation 124. In an even more preferred embodiment, the computer program with altered instruction content resulting from operation 122 is at least partially stored in program execution memory 36 in operation 124. In still other preferred embodiments, the altered computer program can be stored in a different memory type (not shown) and/or stored in more than one type of memory. It should be understood that a transformed computer program stored in nonvolatile file memory 32 or removable memory device 34 is subsequently at least partly loaded into programmable execution memory 36 for execution by device 24 in the depicted embodiment.

Proceeding to operation 126, as the computer program is executed from program execution memory 36, the original content of instructions altered in operation 122 is restored. For the configuration of instruction transform logic 50 described in connection with FIG. 3, this restoration transforms instruction content from the altered form to the unaltered form by repeating the exclusive OR operation. Notably, an exclusive OR operation is reversible when the same key value is used. For the 8-bit example previously described, a bitwise exclusive OR of key value =10010010 and altered instruction = 11110000 provides the result = 01100010, which is the same as the original, unaltered content or the instruction. Operation 126 is performed by processing device 24 internally with instruction decoder 42.

Once restored, an instruction can be decoded in the standard manner by decoder 42 and executed with decoded instruction execution logic 44 in operation 128. If there are any instructions that were not altered, such instructions are recognized as such and directly decoded by decoder 42 and then executed with logic 44. From operation 128, procedure 120 continues with conditional 130 to test if an improper instruction execution has been attempted. Conditional 130 can be implemented with decoder 42, logic 44, and/or such other logic of device 24 as would occur to those skilled in the art. If the test of conditional 130 is affirmative, operation 132 executes a process trap in response to the improper instruction. Typically, the improper instruction is of a reserved or invalid form, which is not in the set of executable instruction types for processing device 24.

Because the transformation of operation 122 is reversed in operation 126, the original program executes as intended. However, a different program that intrudes or invades during execution of the intended computer program through a stack or buffer overrun or the like, will most likely have at least some of its instructions altered by the decoding/restoration operation 126 in such a manner that an improper instruction will be submitted, and is thus indicated by performance of the trap of operation 132. This improper instruction is typically of a form/content that is not included in the set of executable instructions for processing device 24 -- instead being of a format that is reserved or invalid for processing device 24. Procedure 120 halts and returns after operation 132. As a result, processing device 24 can institute such inspection/scanning/diagnostic routines as desired to further analyze why the trap of operation 132 occurred and correspondingly detect intrusion by the different program.

On the other hand, if the test of conditional 130 is negative, procedure 120 continues with conditional 140, which tests if another instruction is to be executed as part of the computer program intended for execution. If the test of conditional 140 is affirmative, control returns to operation 126 to restore the next instruction as needed. If the test of conditional 140 is negative, procedure 120 halts and returns in a normal manner until it is called again.

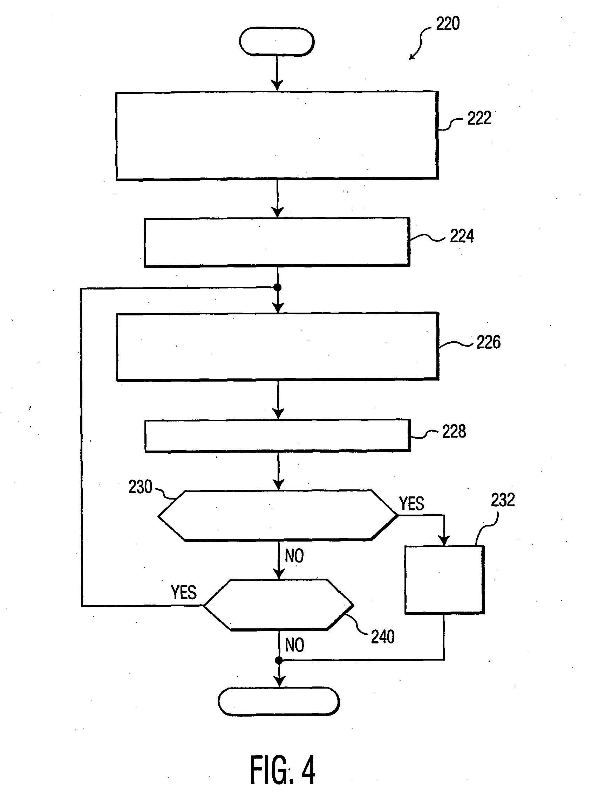

Referring to FIG. 4, another embodiment is illustrated as intrusion detection procedure 220 that can be implemented with computer system 20. Procedure 220 begins with the designation of a computer program in operation 222. For operation 222, program instructions are selectively transformed into a reserved and/or invalid instruction format by substitution. Accordingly, this substitution transformation of operation 222 results in certain instructions having an altered content. Such substitution can be performed in accordance with information provided in one or more registers 52 by transformation logic defined by processing device 24 as an alternative or addition to transformation logic 50, when procedure 220 is implemented with computer system 20. In one form, a register contains a number of bits each designating that a certain type of instruction is to be swapped with a certain type of reserved or invalid instruction format. Other register-stored information can be used to enable/disable this swapping feature, customize the substitution configuration, and/or implement other options, as appropriate. For example, one option might be to select between procedures 120 and 220 as designated by one or more bits of registers 52. Alternatively or additionally, an option to combine the two procedures in a single, hybrid protection scheme can be selected through specified content of registers 52.

After transformation of selected instructions of the program in operation 222, the program is stored in memory with the altered instruction content in operation 224. In one preferred embodiment, the computer program with altered instruction content is stored in nonvolatile file memory 32 in operation 224. In a more preferred form embodiment, the computer program with altered instruction content is stored in removable memory device 34 in operation 224. In an even more preferred embodiment, the computer program with altered instruction content is at least partially stored in program execution memory 36 in operation 224. In still other preferred embodiments, the altered computer program can be stored in a different memory type (not shown) and/or stored in more than one type of memory. Procedure 220 proceeds from operation 224 to operation 226. In operation 226, the original instruction content is restored through a reverse substitution operation during execution of the computer program. Specifically, the pattern of substitution defined by one or more of registers 52 is utilized by processing device 24 to reverse the substitution procedure providing the original, valid instructions in place of the reserved or invalid instruction formats substituted in operation 222. For a computer system 20 implementation; this reverse substitution procedure is performed by instruction decoder 42. After such: restoration, each restored instruction is decoded in a standard manner by decoder 42 and executed in operation 228 by decoded instruction execution logic 44. For instructions that were not altered in operation 222, decoder 42 recognizes them as such and accordingly decodes them directly for processing by logic 44.

Procedure 220 continues from operation 228 with conditional 230. Conditional 230 tests whether an improper instruction execution has been attempted during the execution of the computer program. If the test of conditional 230 is affirmative, operation 232 is encountered in which processing device 24 performs a process trap regarding the invalid instruction attempt. As in the case of operation 132 of procedure 120, operation 232 can be utilized to trigger further diagnostics and analysis to indicate or detect that an intrusion by a different program has occurred during the execution of the computer program intended for execution, as appropriate. Correspondingly, procedure 220 halts and returns from operation 232.

If the test of conditional 230 is negative, procedure 220 continues with conditional 240, which tests whether another instruction is to be executed as part of the submitted computer program. If the test of conditional 240 is affirmative, procedure 220 loops back to operation 226 to execute the next program instruction, restoring those instructions substituted with a reserved or invalid content, as needed. If the test of conditional 240 is negative, procedure 220 is halted and returns to the caller in a normal manner until it is called again.

It should be appreciated that both procedures 120 and 220 can be implemented by modestly modifying the logic of a standard processor or multiple processor arrangement. Furthermore, such logic can be implemented in the form of software instructions, firmware instructions, microinstructions, dedicated hardware, or a combination of these. It should be appreciated that both procedures 120 and 220 are directed to an embodiment of the present invention, that comprises: altering content of one or more instructions of a computer program, restoring each of the one or more instructions to the content before this alteration and performing the one or more instructions after restoration. This embodiment can further comprise providing for the detection of intrusion by a different program during execution of the computer program through the submission of at least one instruction of an improper form by the different program. Also within such embodiments are different ways to alter the instruction content in such a manner that restoration is possible. Correspondingly, these different ways can be used to provide for intrusion detection as an alternative or addition to previously described techniques.

Furthermore, it is envisioned that logic to perform intrusion detection in accordance with any of these variations can be implemented through instructions stored on a device for subsequent access by a corresponding processor or processors, such as removable memory device 34 in the form of a cartridge, disk, chip, card, tape, or combination of these. Removable memory device 34 can also be utilized to store a computer program with content of one or more of its instructions altered in such a manner that restoration can be performed during executing by a processing device with appropriate instruction transformation information to provide protection form intrusion by a different program. For this situation, the instruction transformation information can be provided in the form of a key, register values, or the like, along with the altered computer program; and/or communicated separately for use by the processor intended to execute the program after appropriate instruction restoration. Alternatively or additionally, processors of a given type can internally be coded in such a manner that the pattern of instruction alteration is automatically recognized by such processors.

## Claims

1. A method, comprising the steps of altering and storing content of one or more instructions of a computer program (122,222); executing the computer program (128,228); said executing including restoring each of the one or more instructions to the content before said altering; and executing the one or more instructions after said restoring; and providing for detection of intrusion by a different program (130,230), the intrusion occurring during said executing, wherein the detection is based on testing whether an improper instruction execution has been attempted during the execution of the restored computer program; and based on the test result, performing a process trap for an instruction of improper form submitted by the different program, the performing of the process trap comprising triggering further diagnostics and analysis to indicate or detect that an intrusion by the different program has occurred.

2. The method of claim 1, which includes performing said executing (128) with a processing device (24) and performing said altering (122) and said restoring (126) with the processing device (24) in accordance with a key (52a).

3. The method of claim 2, which includes dynamically changing the key (52a) in accordance with instruction addressing.

4. The method of claim 2, which includes encoding the instructions based on an exclusive or logic (53) function with the key (52a).

5. The method of claim 1, which includes performing said executing (228) with a processing device (24) and said altering (222) includes substituting each of the instructions with an instruction of improper type for the processing device (24) and said restoring (226) includes replacing the instruction of improper type with an instruction of proper type for each of the one or more instructions.

6. The method of claim 5, wherein the instruction of improper type is a reserved or illegal instruction type.

7. The method of claim 1, which includes storing (124, 224) the computer program in memory after said altering (122, 222) and before said executing (128, 228).

8. The method of claim 7, wherein said altering (122, 222), said storing (124, 224), and said executing (128, 228) are performing with a processor (22) and the memory (36) is a program execution memory for the processor (22).

9. The method of claim 1, wherein said altering (122, 222) and said executing (128, 228) are performed by a processing device (24), and said altering (122, 222) includes changing the content of each of the one or more instructions that defines instruction type.

10. The method of claim 1, wherein said altering (122, 222) includes changing the content of each of the one or more instructions from a first form to a second form, the first form belonging to an a set of executable instructions for a processing device (24) and at least a portion of the one or more instructions of the second form not belonging to the set of executable instructions or executing in a different manner than the first form.

11. An apparatus, comprising: a device (32, 34, 36) with a computer program stored thereon, the computer program including a number of instructions each with content in an altered form in accordance with an instruction transformation to detect intrusion by a different program during execution of the computer program with a processor (22), the altered form of the instructions being arranged for restoration by the processor (22) to an unaltered form by reversing the instruction transformation before execution by the processor (22), the unaltered form of the instructions each belonging to an executable instruction set for the processor and the altered form of at least a portion of the instructions, not belonging to the executable instruction set for the processor (22), the instruction transformation and restoration being operable to indicate intrusion by a different program by submitting at least one instruction to the processor (22) for execution that does not belong to the executable instruction set, wherein the apparatus is configured to detect an intrusion by a different program based on testing whether an execution of an instruction not belonging to the executable instruction set has been attempted during the execution of the restored computer program; and based on the test result, performing a process trap for an instruction of improper form submitted by the different program, the performing a process trap comprising triggering further diagnostics and analysis to indicate or detect that an intrusion by the different program has occurred.

12. The apparatus of claim 11, wherein the device (32, 34, 36) includes a nonvolatile, file memory (32) storing the computer program with the instructions in the altered form.

13. The apparatus of claim 12, wherein the device (32, 34, 36) includes a program execution memory (36) operatively coupled to the processor (22).

14. The apparatus of claim 11, wherein the altered form of the instructions is determined as a function of a key (52a).

15. The apparatus of claim 14, wherein the altered form of the instructions is determined in accordance with an exclusive or (53) function.

16. The apparatus of claim 11, wherein the altered form of the instructions is provided by substituting a reserved or illegal instruction type for one included in the executable instruction set.

17. A computer system, comprising: a processing device (24) including instruction transformation logic (50) effective to alter content of one or more instructions of a computer program and store the computer program after instruction content alteration, the processing device (24) further including a decoder (42) responsive to the instruction transformation logic (50) to restore the one or more instructions to the content before the instruction content alteration, the processing device (24) being effective to execute the instructions after restoration by the decoder (42) and indicate intrusion by a different program based on submission of an improper form of instruction from the different program for execution by the processing device (24), wherein the apparatus is configured to detect an intrusion by the different program based on testing whether an improper instruction execution has been attempted during the execution of the restored computer program, and based on the test result, performing a process trap for an instruction of improper form submitted by the different program, the performing a process trap comprising triggering further diagnostics and analysis to indicate or detect that an intrusion by the different program has occurred.

18. The system of claim 17, further comprising a memory (32, 34, 36) effective to store the computer program with the instruction content alteration.

19. The system of claim 17, wherein at least a portion of the transformation logic (50) is defined by hardware including one or more registers (52) and the decoder (42) operates in response to information stored in the one or more registers (52).

20. The system of claim 19, wherein the information includes a key (52a) to decode the instruction content alteration with the decoder (42) to perform the restoration.

21. The system of claim 20, wherein the instruction transformation logic (50) defines an exclusive or (53) function.

22. The system of claim 17, wherein at least a portion of the transformation logic (50) is defined by software or firmware instructions.

23. The system of claim 17, wherein the improper form of instruction of the different program corresponds to a reserved or invalid instruction format, and the instruction transformation logic is effective to swap the one or more instructions of the computer program with a reserved or invalid instruction type to provide the instruction content alteration.

## Patentansprüche

1. Verfahren, das die Schritte aufweist:
Ändern und Speichern von Inhalt von einer oder mehreren Anweisungen eines Computerprogramms (122, 222);
Ausführen des Computerprogramms (128, 228), wobei das Ausführen ein Wiederherstellen jeder der einen oder mehreren Anweisungen in den Inhalt vor dem Ändern und ein Ausführen der einen oder mehreren Anweisungen nach dem Wiederherstellen aufweist; und
für Detektion eines Eindringens mittels eines anderen Programms (130, 230) Sorgen, wobei das Eindringen während des Ausführens erfolgt, wobei die Detektion auf Überprüfen basiert, ob eine unzulässige Anweisungsausführung während des Ausführens des wiederhergestellten Computerprogramms versucht wurde; und
basierend auf dem Überprüfungsresultat eine Prozessfalle für eine Anweisung unzulässiger Form, die mittels des anderen Programms überreicht wurde, Durchführen, wobei das Durchführen der Prozessfalle Triggern weiterer Diagnostik und Analyse aufweist, um anzuzeigen oder zu detektieren, dass ein Eindringen mittels des anderen Programms erfolgt ist.

2. Verfahren nach Anspruch 1, das ein Durchführen des Ausführens (128) mit einer Verarbeitungsvorrichtung (24) und Durchführen des Änderns (122) und des Wiederherstellens (126) mit der Verarbeitungsvorrichtung (24) in Übereinstimmung mit einem Schlüssel (52a) aufweist.

3. Verfahren nach Anspruch 2, das ein dynamisches Wechseln des Schlüssels (52a) in Übereinstimmung mit Anweisungsadressierung aufweist.

4. Verfahren nach Anspruch 2, das ein Kodieren der Anweisung basierend auf einer Exklusiv-OR-Logik (53) Funktion mit dem Schlüssel (52a) aufweist.

5. Verfahren nach Anspruch 1, das ein Durchführen des Ausführens (228) mit einer Verarbeitungsvorrichtung (24) aufweist und das Ändern (222) eSubstituieren jeder der Anweisungen mit einer Anweisung von unzulässiger Art für die Verarbeitungsvorrichtung (24) aufweist und das Wiederherstellen (226) Ersetzen der Anweisung von unzulässiger Art mit einer Anweisung von zulässiger Art für jede der einen oder mehreren Anweisungen aufweist.

6. Verfahren nach Anspruch 5, wobei die Anweisung von unzulässiger Art eine reservierte oder illegale Anweisungsart ist.

7. Verfahren nach Anspruch 1, das ein Speichern (124, 224) des Computerprogramms in einem Speicher nach dem Ändern (122, 222) und vor dem Ausführen (128, 228) aufweist.

8. Verfahren nach Anspruch 7, wobei das Ändern (122, 222), das Speichern (124, 224) und das Ausführen (128, 228) mit einem Prozessor (22) durchgeführt werden und der Speicher (36) ein Programmausführungsspeicher für den Prozessor (22) ist.

9. Verfahren nach Anspruch 1, wobei das Ändern (122, 222) und das Ausführen (128, 228) mittels einer Verarbeitungsvorrichtung (24) durchgeführt werden und das Ändern (122, 222) Abändern des Inhaltes von jeder der einen oder mehreren Anweisungen aufweist, was eine Anweisungsart definiert.

10. Verfahren nach Anspruch 1, wobei das Ändern (122, 222) Abändern des Inhaltes von jede der einen oder mehreren Anweisungen von einer ersten Form in eine zweite Form aufweist, wobei die erste Form zu einem Satz von ausführbaren Anweisungen für eine Verarbeitungsvorrichtung(24) gehört und wobei zumindest ein Teil der einen oder mehreren Anweisungen der zweiten Form nicht zu dem Satz der ausführbaren Anweisungen gehört oder in einer anderen Art und Weise als der ersten Form ausführen.

11. Eine Vorrichtung aufweisend:
ein Gerät (32, 34, 36) mit einem darauf gespeicherten Computerprogramm, wobei das Computerprogramm eine Anzahl von Anweisungen, jede mit Inhalt in einer geänderter Form in Übereinstimmung mit einer Anweisungstransformation zum Detektieren eines Eindringens mittels eines anderen Programms während Ausführens des Computerprogramms mit einem Prozessor (22) aufweist, wobei die geänderte Form der Anweisungen zur Wiederherstellung mittels des Prozessors (22) in eine ungeänderte Form mittels Reversierens der Anweisungstransformation vor Ausführung durch den Prozessor (22) arrangiert ist, wobei die ungeänderte Form der Anweisungen jede zu einem ausführbaren Anweisungssatz für den Prozessor gehört, und die geänderte Form zumindest eines Teils der Anweisungen nicht zu dem ausführbaren Anweisungssatz für den Prozessor (22) gehören, wobei die Anweisungstransformation und -wiederherstellung betreibbar sind, Eindringen mittels eines anderen Programms, mittels Übermittlung von zumindest einer Anweisung an den Prozessor (22) zur Ausführung, die nicht zu dem ausführbaren Anweisungssatz gehört, anzuzeigen, wobei die Vorrichtung zum Detektieren eines Eindringens mittels eines anderen Programms konfiguriert ist, basierend auf Überprüfen, ob eine Ausführung von einer Anweisung, die nicht zu dem ausführbaren Anweisungssatz gehört, während der Ausführung des wiederhergestellten Computerprogramms versucht wurde, und basierend auf dem Überprüfungsresultat eine Prozessfalle für eine Anweisung unzulässiger Form, die mittels des anderen Programms überreicht wurde, durchzuführen, wobei das Durchführen einer Prozessfalle Triggern weiterer Diagnostik und Analyse aufweist, um anzuzeigen oder zu detektieren, dass ein Eindringen mittels des anderen Programms erfolgt ist.

12. Vorrichtung nach Anspruch 11, wobei das Gerät (32, 34, 36) einen non-volatilen Dateispeicher (32) aufweist, der das Computerprogramm mit den Anweisungen in der geänderter Form speichert.

13. Vorrichtung nach Anspruch 12, wobei das Gerät (32, 34, 36) einen funktionsfähig mit dem Prozessor (22) gekoppelten Programmausführungsspeicher (36) aufweist.

14. Vorrichtung nach Anspruch 11, wobei die geänderte Form der Anweisungen als eine Funktion eines Schlüssel (52a) bestimmt ist.

15. Vorrichtung nach Anspruch 14, wobei die geänderte Form der Anweisungen in Übereinstimmung mit einer Exklusiv-OR (53) Funktion bestimmt ist.

16. Vorrichtung nach Anspruch 11, wobei die geänderte Form der Anweisungen mittels Substituierens mit einer reservierten oder illegalen Anweisungsart für eine in dem ausführbaren Anweisungssatz enthaltenen bereitgestellt wird.

17. Computersystem aufweisend:
Eine Verarbeitungsvorrichtung (24), die eine Anweisungstransformationslogik (50) aufweist, die in der Lage ist, Inhalt von einer oder mehreren Anweisungen eines Computerprogramms zu ändern und das Computerprogramm nach Anweisungsinhaltsänderung zu speichern, wobei die Verarbeitungsvorrichtung (24) ferner einen Dekoder (42) aufweist, um reagierend auf die Anweisungstransformationslogik (50) die eine oder mehreren Anweisungen in den Inhalt vor der Anweisungsinhaltsänderung wiederherzustellen, wobei die Verarbeitungsvorrichtung (24) in der Lage ist, die Anweisungen nach der Wiederherstellung mittels des Dekoder (42) auszuführen und Eindringen mittels eines anderen Programms basierend auf einer Eingabe einer unzulässigen Form von Anweisung von dem anderem Programm zur Ausführung mittels der Verarbeitungsvorrichtung (24) anzuzeigen, wobei die Vorrichtung zum Detektieren eines Eindringens mittels des anderen Programms konfiguriert ist, basierend auf Überprüfen, ob eine unzulässige Anweisungsausführung während der Ausführung des wiederhergestellten Computerprogramms versucht wurde, und basierend auf dem Überprüfungsergebnis eine Prozessfalle für eine Anweisung unzulässiger Form, die mittels des anderen Programms überreicht wurde, durchzuführen, wobei das Durchführen einer Prozessfalle Triggern weiterer Diagnostik und Analyse aufweist, um anzuzeigen oder zu detektieren, dass ein Eindringen mittels des anderen Programms erfolgt ist.

18. System nach Anspruch 17, ferner einen Speicher (32, 34, 36) aufweisend, der in der Lage ist, das Computerprogramm mit der Anweisungsinhaltsänderung zu speichern.

19. System nach Anspruch 17, wobei zumindest ein Teil der Transformationslogik (50) mittels Hardware bestimmt ist, die ein oder mehrere Register (52) aufweist und der Dekoder (42) in Reaktion auf Information operiert, die in dem einem oder mehreren Registern (52) gespeichert ist.

20. System nach Anspruch 19, wobei die Information einen Schlüssel (52a) aufweist zum Dekodieren der Anweisungsinhaltsänderung mit dem Dekoder (42) zum Durchführen der Wiederherstellung.

21. System nach Anspruch 20, wobei die Anweisungstransformationslogik (50) eine Exklusiv-OR Funktion (53) definiert.

22. System nach Anspruch 17, wobei zumindest ein Teil der Transformationslogik (50) mittels Software oder Firmware Anweisungen definiert ist.

23. System nach Anspruch 17, wobei die unzulässige Form der Anweisung des anderen Programms einem reservierten oder ungültigen Anweisungsformat entspricht, und die Anweisungstransformationslogik in der Lage ist, die eine oder mehreren Anweisungen des Computerprogramms mit einer reservierten oder ungültigen Anweisungsart auszutauschen, um die Anweisungsinhaltsänderung bereitzustellen.

## Revendications

1. Procédé comprenant les étapes de modification et de mémorisation du contenu d'une ou de plusieurs instructions d'un programme d'ordinateur (122, 222) ; d'exécution du programme d'ordinateur (128, 228) ; de rétablissement, pour chacune de la ou des instructions, du contenu tel qu'il était avant ladite modification ; et d'exécution de la ou des instructions après ledit rétablissement ; et prévoyant une détection d'intrusion par un programme différent (130, 230), l'intrusion se produisant pendant ladite exécution ; le procédé étant tel que la détection est basée sur le fait de tester si une exécution d'instruction incorrecte a été tentée pendant l'exécution du programme d'ordinateur rétabli, puis, sur la base du résultat du test, de mettre en oeuvre une commande de capture de processus pour une instruction de forme incorrecte soumise par le programme différent, la mise en oeuvre de la commande de capture de processus comprenant le déclenchement d'un diagnostic et d'une analyse supplémentaires pour indiquer ou détecter qu'une intrusion par le programme différent s'est produite.

2. Procédé selon la revendication 1, qui inclut la mise en oeuvre de ladite exécution (128) avec un dispositif de traitement (24) et la mise en oeuvre de ladite modification (122) et dudit rétablissement (126) avec le dispositif de traitement (24) en conformité avec une clé (52a).

3. Procédé selon la revendication 2, qui inclut un changement dynamique de la clé (52a) en conformité avec un adressage d'instructions.

4. Procédé selon la revendication 2, qui inclut un codage des instructions en se basant sur une fonction logique ou exclusif (53) avec la clé (52a).

5. Procédé selon la revendication 1, qui inclut la mise en oeuvre de ladite exécution (228) avec un dispositif de traitement (24), ladite modification (222) incluant une substitution à chacune des instructions d'une instruction de type incorrect pour le dispositif de traitement (24), et ledit rétablissement (226) incluant un remplacement de l'instruction de type² incorrect par une instruction de type correct pour chacune de la ou des instructions.

6. Procédé selon la revendication 5, dans lequel l'instruction de type incorrect est d'un type d'instruction qui est réservé ou illégal.

7. Procédé selon la revendication 1, qui inclut une mémorisation (124, 224) du programme d'ordinateur dans une mémoire après ladite modification (122, 222) et avant ladite exécution (128, 228).

8. Procédé selon la revendication 7, dans lequel ladite modification (122, 222), ladite mémorisation (124, 224) et ladite exécution (128, 228) sont mises en oeuvre avec un processeur (22), et la mémoire (36) est une mémoire d'exécution de programme pour le processeur (22).

9. Procédé selon la revendication 1, dans lequel ladite modification (122, 222) et ladite exécution (128, 228) sont mises en oeuvre par un dispositif de traitement (24), et ladite modification (122, 222) inclut un changement du contenu de chacune de la ou des instructions qui définit le type d'instruction.

10. Procédé selon la revendication 1, dans lequel ladite modification (122, 222) inclut un changement du contenu de chacune de la ou des instructions d'une première forme en une deuxième forme, la première forme appartenant à un jeu d'instructions exécutables pour un dispositif de traitement (24) et au moins une partie de la ou des instructions de la deuxième forme n'appartenant pas au jeu d'instructions exécutables ou étant exécutées d'une manière différente par rapport à la première forme.

11. Appareil, comprenant : un dispositif (32, 34, 36) sur lequel un programme d'ordinateur est mémorisé, le programme d'ordinateur incluant un certain nombre d'instructions dont chacune a un contenu sous une forme modifiée en conformité avec une transformation d'instructions pour détecter une intrusion par un programme différent pendant l'exécution3du programme d'ordinateur avec un processeur (22), la forme modifiée des instructions étant organisée en vue d'un rétablissement, par le processeur (22), d'une forme non modifiée par application inverse de la transformation d'instructions avant l'exécution par le processeur (22), la forme non modifiée des instructions appartenant pour chacune d'elles à un jeu d'instructions exécutables pour le processeur et la forme modifiée d'au moins une partie des instructions n'appartenant pas au jeu d'instructions exécutables pour le processeur (22), la transformation et le rétablissement d'instructions étant prévus pour permettre l'indication d'une intrusion par un programme différent par soumission au processeur (22), pour exécution, d'au moins une instruction qui n'appartient pas au jeu d'instructions exécutables, l'appareil étant configuré pour détecter une intrusion par un programme différent en se basant sur le fait de tester si une exécution d'une instruction n'appartenant pas au jeu d'instructions exécutables a été tentée pendant l'exécution du programme d'ordinateur rétabli, puis, sur la base du résultat du test, de mettre en oeuvre une commande de capture de processus pour une instruction de forme incorrecte soumise par le programme différent, la mise en oeuvre de la commande de capture de processus comprenant le déclenchement d'un diagnostic et d'une analyse supplémentaires pour indiquer ou détecter qu'une intrusion par le programme différent s'est produite.

12. Appareil selon la revendication 11, dans lequel le dispositif (32, 34, 36) inclut une mémoire de fichier non volatile (32) mémorisant le programme d'ordinateur avec les instructions sous la forme modifiée.

13. Appareil selon la revendication 12, dans lequel le dispositif (32, 34, 36) inclut une mémoire d'exécution de programme (36) prévue pour être couplée au processeur (22).

14. Appareil selon la revendication 11, dans lequel la forme modifiée des instructions est déterminée en tant que fonction d'une clé (52a).

15. Appareil selon la revendication 14, dans lequel la forme modifiée des instructions est déterminée en conformité⁴ avec une fonction ou exclusif (53).

16. Appareil selon la revendication 11, dans lequel la forme modifiée des instructions est obtenue par substitution d'un type d'instruction réservé ou illégal à celui inclus dans le jeu d'instructions exécutables.

17. Système d'ordinateur, comprenant : un dispositif de traitement (24) incluant un étage logique de transformation d'instructions (50) capable de modifier le contenu d'une ou de plusieurs instructions d'un programme d'ordinateur et de mémoriser le programme d'ordinateur après la modification du contenu des instructions, le dispositif de traitement (24) incluant en outre un décodeur (42) capable, en réponse à l'étage logique de transformation d'instructions (50), de rétablir pour la ou les instructions leur contenu tel qu'il était avant la modification du contenu des instructions, le dispositif de traitement (24) étant capable d'exécuter les instructions après le rétablissement par le décodeur (42) et d'indiquer une intrusion par un programme différent sur la base de la soumission, pour une exécution par le dispositif de traitement (24), d'une forme incorrecte d'instruction de la part du programme différent, l'appareil étant configuré pour détecter une intrusion par le programme différent en se basant sur le fait de tester si une exécution d'instruction incorrecte a été tentée pendant l'exécution du programme d'ordinateur rétabli, puis, sur la base du résultat du test, de mettre en oeuvre une commande de capture de processus pour une instruction de forme incorrecte soumise par le programme différent, la mise en oeuvre de la commande de capture de processus comprenant le déclenchement d'un diagnostic et d'une analyse supplémentaires pour indiquer ou détecter qu'une intrusion par le programme différent s'est produite.

18. Système selon la revendication 17, comprenant en outre une mémoire (32, 34, 36) capable de mémoriser le programme d'ordinateur avec la modification du contenu des instructions.

19. Système selon la revendication 17, dans lequel au moins une partie de l'étage logique de transformation (50) est définie⁵ par un matériel incluant un ou plusieurs registres (52) et le décodeur (42) opère en réponse à une information mémorisée dans le ou les registres (52).

20. Système selon la revendication 19, dans lequel l'information inclut une clé (52a) pour décoder la modification du contenu des instructions avec le décodeur (42) en vue de la mise en oeuvre du rétablissement.

21. Système selon la revendication 20, dans lequel l'étage logique de transformation d'instructions (50) définit une fonction ou exclusif (53).

22. Système selon la revendication 17, dans lequel au moins une partie de l'étage logique de transformation (50) est définie par des instructions de logiciel ou de micrologiciel.

23. Système selon la revendication 17, dans lequel la forme incorrecte des instructions du programme différent correspond à un format d'instruction réservé ou invalide, et l'étage logique de transformation d'instructions est capable de réaliser un échange de la ou des instructions du programme d'ordinateur avec un type d'instruction réservé ou invalide pour fournir la modification du contenu des instructions.
